# Europäisches Patentamt

**(19)** **European Patent Office**

**Office européen des brevets**

**(11)** Numéro de publication: **0 184 488**
**B1**

**(12)** **FASCICULE DE BREVET EUROPEEN**

**(45)** Date de publication du fascicule du brevet:
**17.11.88**

**(51)** Int. Cl.⁴: **G 21 C 19/30**

**(21)** Numéro de dépôt: **85402196.1**

**(22)** Date de dépôt: **13.11.85**

**(54)** **Dispositif de purification intégré du métal liquide de refroidissement d'un réacteur nucléaire à neutrons rapides.**

**(30)** Priorité: **16.11.84 FR 8417551**

**(43)** Date de publication de la demande:
**11.06.86 Bulletin 86/24**

**(45)** Mention de la délivrance du brevet:
**17.11.88 Bulletin 88/46**

**(84)** Etats contractants désignés:
**BE DE GB IT LU NL**

**(56)** Documents cités:
**FR - A - 2 246 942**
**FR - A - 2 521 762**
**US - A - 4 291 865**

**KERNENERGIE, vol. 22, no. 1, janvier 1979, pages 16-24,
Dimitroffgrad, SU; V.I. SUBBOTIN et al.: "Reinigung des
Natriumwärmeträgers mittels Kalt- und Heissfallen und
Reinigung des Schutzgases"**

**(73)** Titulaire: **NOVATOME, La Boursidière R.N. 186,
F-92357 Le Plessis Robinson (FR)**

**(72)** Inventeur: **Chaut, François, Résidence Oxford 1 rue
Bassigny, F-78310 Maurepas (FR)**
Inventeur: **Fernandez, Luis, 22 Impasse de la Cerisaie,
F-91120 Palaiseau (FR)**
Inventeur: **Mauguet, Christian, 9 rue du Bois Troquet,
F-91000 Bondoufle (FR)**

**(74)** Mandataire: **Polus, Camille et al, c/o Cabinet
Lavoix 2, Place d'Estienne d'Orves, F-75441 Paris
Cedex 09 (FR)**

## Description

L'invention concerne un dispositif de purification intégré du métal liquide de refroidissement d'un réacteur à neutrons rapides comportant une cuve remplie de métal liquide renfermant le cœur du réacteur et une dalle horizontale de fermeture de la cuve.

Dans de tels réacteurs nucléaires à neutrons rapides refroidis par du métal liquide, qui est généralement du sodium, ce sodium appelé sodium primaire s'échauffe au contact des assemblages du cœur qu'il parcourt dans la direction verticale de bas en haut.

Pendant sa circulation dans la cuve et pendant sa traversée du cœur, le sodium primaire se charge d'impuretés telles que des oxydes, des hydrures dissous dans le sodium ou telles que des particules solides en suspension. Il est donc nécessaire d'épurer le sodium liquide pendant le fonctionnement du réacteur pour éviter qu'il ne soit chargé d'une trop grande quantité d'impuretés.

On utilise généralement pour effectuer cette épuration des dispositifs complexes permettant de prélever une partie du sodium liquide, de le refroidir et de le faire passer sur un filtre constitué par des fibres métalliques, par exemple en acier inoxydable. Les impuretés contenues dans le métal liquide précipitent préférentiellement sur les fibres métalliques du filtre si la température du métal liquide est suffisamment basse. On opère ainsi un piègeage à froid des impuretés.

De tels dispositifs comportent généralement une pompe de mise en circulation du métal liquide, un échangeur économiseur permettant de réaliser un transfert de chaleur entre le métal non épuré chaud et le métal épuré refroidi, un dispositif de refroidissement complémentaire du métal liquide et une cartouche de filtration en fibres métalliques. Lorsque les dispositifs de purification sont plongés directement dans le sodium remplissant la cuve du réacteur, ils sont dits intégrés.

On connaît des dispositifs de purification intégrés comportant une virole de suspension dont la partie supérieure est solidaire d'un bride reposant sur la dalle du réacteur nucléaire lorsque le dispositif de purification est mis en place dans la cuve du réacteur nucléaire, la virole de suspension ayant alors son axe vertical.

L'ensemble du dispositif placé à l'intérieur de la virole de suspension pénètre dans la cuve par une traversée de la dalle de fermeture de forte épaisseur qui est obturée par un bouchon de protection contre les radiations et d'isolation thermique solidaire de la partie supérieure du dispositif de purification.

La plupart des dispositifs connus ont l'inconvénient de comporter des parties résistantes assurant la rigidité et le support du dispositif dans la cuve telles que la virole de suspension, en contact avec le liquide de refroidissement remplissant la cuve à très haute température. Même si la virole de suspension est entourée extérieurement sur une partie de sa hauteur par du matériau calorifuge, il n'en reste pas moins que cette virole n'est pas suffisamment refroidie, si bien qu'elle subit des contraintes thermiques importantes.

Dans le FR-A-2 246 942, est décrit un dispositif de purification du type mentionné ci-dessus dont la virole de suspension délimite autour de la zone occupée par le filtre, un espace annulaire rempli par du sodium statique et renfermant des moyens de refroidissement complémentaires du métal liquide.

Cependant, la pompe de mise en circulation du métal liquide dans le dispositif de purification est immergée dans le sodium chaud à épurer à la partie inférieure du dispositif de purification, pour assurer le refoulement de ce métal liquide chaud dans le dispositif de qui la fait travailler en permanence dans de très dures conditions préjudiciables à sa durée de vie.

Des tuyauteries assurent aussi la liaison entre les différents organes constitutifs; ces tuyauteries sont soumises à des dilatations importantes qui les rendent peu fiables.

De plus, le réglage du débit de sodium à épurer est réalisé par des dispositifs mécaniques compliqués.

Le but de l'invention est donc de proposer un dispositif de purification intégrée du métal liquide de refroidissement d'un réacteur nucléaire à neutrons rapides comportant une cuve remplie de métal liquide renfermant le cœur du réacteur et une dalle horizontale de fermeture de la cuve, le dispositif de purification comportant une virole de support et de suspension reposant sur la dalle par une bride solidaire de sa partie supérieure et pénétrant dans la cuve par une ouverture traversant la dalle, la virole de suspension étant disposée avec son axe vertical dans sa position de service à l'intérieur de la cuve, des moyens de filtration en fibres métalliques de forme tubulaire disposés coaxialement par rapport à la virole de suspension, une pompe de mise en circulation du métal liquide, un échangeur économiseur pour le refroidissement du liquide à purifier par du métal liquide refroidi et purifié et des moyens de refroidissement complémentaires du métal liquide placés dans un espace annulaire entourant les moyens de filtration sur toute leur hauteur, limité par deux parois cylindriques coaxiales, la virole de suspension constituant une des parois limitant l'espace annulaire qui contient un fluide d'échange thermique assurant le refroidissement du métal liquide au niveau des moyens de filtration ainsi que le refroidissement de la virole de suspension, ce dispositif de purification ayant des composants à température modérée et en particulier une pompe immergée dans du sodium refroidi.

Dans ce but:
— l'échangeur économiseur est constitué par un faisceau tubulaire à axe vertical et à section transversale en forme d'anneau, suspendu à la partie inférieure de la virole de suspension coaxialement à celle-ci, en-dessous de l'espace annulaire de refroidissement, la partie d'entrée de l'échangeur économiseur recevant le métal liquide chaud contenu dans la cuve étant située à sa partie inférieure,

– et la pompe de mise en circulation du métal liquide est disposée dans l'espace intérieur de l'échangeur économiseur et entourée par des parois assurant sa fixation par rapport à l'échangeur économiseur et ménageant un espace autour de la pompe en communication avec la partie supérieure de l'échangeur économiseur dans laquelle circule du métal liquide refroidi.

Afin de bien faire comprendre l'invention, on va maintenant décrire, en se référant aux figures jointes en annexe un mode de réalisation d'un dispositif de purification intégré dans une cuve de réacteur nucléaire à neutrons rapides, selon l'invention.

La fig. 1 est une vue en coupe par un plan vertical de symétrie d'un dispositif de purification suivant l'invention et suivant un premier mode de réalisation;

la fig. 2 est une vue en coupe verticale des moyens de filtration du dispositif de purification représenté à la fig. 1, selon une variante de réalisation;

la fig. 3 est une vue en coupe par un plan vertical de symétrie du dispositif de purification selon l'invention et selon un second mode de réalisation;

la fig. 4 est une vue en coupe des moyens de filtration du dispositif de purification représenté à la fig. 3, selon une variante;

la fig. 5 est une demi-vue en coupe par un plan vertical d'une variante des moyens de refroidissement complémentaire d'un dispositif de purification tel que représenté sur les fig. 1 et 3;

la fig. 5a est une vue suivant AA de la fig. 5;

la fig. 5b est une vue en coupe suivant BB de la fig. 5a, de la partie supérieure des moyens de refroidissement complémentaire;

la fig. 6 est une demi-vue en coupe d'une seconde variante de réalisation des moyens de refroidissement complémentaire d'un dispositif de purification tel que représenté sur les fig. 1 et 3;

la fig. 7 est une demi-vue en coupe par un plan vertical d'une troisième variante de réalisation des moyens de refroidissement complémentaire d'un dispositif de purification tel que représenté aux fig. 1 et 3.

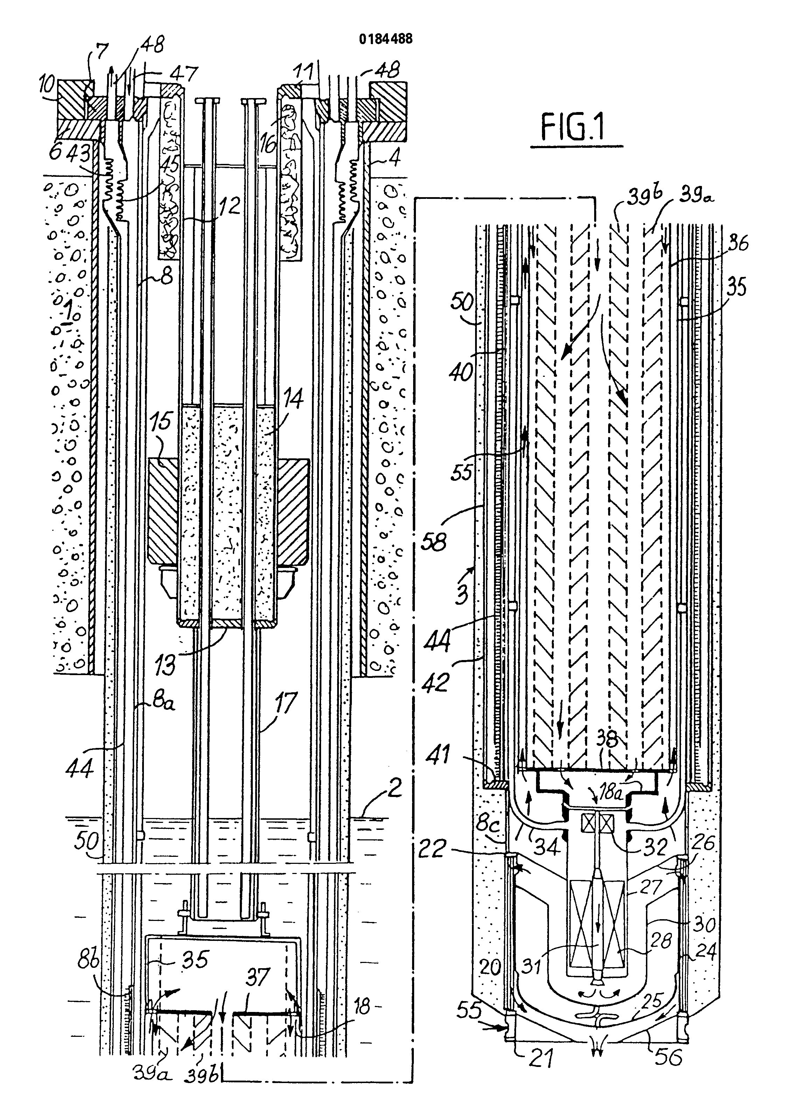

Sur la fig. 1, on voit la dalle de fermeture 1 de la cuve d'un réacteur nucléaire renfermant du sodium liquide jusqu'au niveau 2. Le dispositif de purification intégré désigné de façon générale par le repère 3 plonge à l'intérieur du sodium liquide et traverse la dalle 1 de forte épaisseur à l'intérieur d'une traversée 4. La virole de traversée 4 porte à sa partie supérieure une bride 6 sur laquelle vient reposer une bride 7 solidaire de la partie supérieure de la virole de suspension 8 du dispositif de purification intégré 3. Une contre-bride 10 permet de fixer le dispositif de purification après sa mise en place dans la cuve du réacteur.

Sur la bride 7 de la virole de suspension 8, repose une bride 11 solidaire de la partie supérieure d'une virole 12 constituant la structure de support du bouchon de fermeture de la traversée 4. Cette virole 12 est fermée à sa partie inférieure par un fond 13 et constitue ainsi un bac rempli de grenailles de plomb 14 arrêtant les radiations venant de l'intérieur de la cuve et constituant ainsi une protection biologique. Cette protection biologique est complétée à l'extérieur de la virole 12 par un anneau massif en acier 15. La virole 12 du bouchon porte également à sa partie supérieure une caisson annulaire 16 rempli de matériau calorifuge.

La virole 12 du bouchon porte enfin, par l'intermédiaire d'une virole 17, l'ensemble des moyens de filtration 18.

On peut ainsi démonter indépendamment de la virole de suspension 8 du dispositif de purification toute sa partie centrale comportant le bouchon et le filtre, par exemple pour le nettoyage et le décolmatage de ce filtre 18.

La virole de suspension 8 comporte une partie supérieure 8a constituée par un simple cylindre de forte épaisseur et une partie inférieure 8b constituée par l'assemblage de deux tôles cylindriques coaxiales laissant entre elles un espace annulaire rempli par un métal liquide d'échange thermique tel que le mélange eutectique sodium-potassium.

La virole de suspension 8 se termine à sa partie inférieure par une virole 8c de support de l'échangeur économiseur 20 du dispositif de purification.

L'échangeur économiseur comporte un faisceau tubulaire formé de tubes verticaux reliés à leur partie inférieure à un collecteur d'entrée annulaire 21 et à leur partie supérieure à une plaque tubulaire également annulaire 22. La section transversale de l'échangeur économiseur est donc annulaire sur toute sa hauteur. Cet échangeur économiseur 20 comporte deux rangées de tubes coaxiales offrant ainsi une grande surface d'échange pour le refroidissement du sodium de la cuve à purifier pénétrant dans le collecteur d'entrée 21 et circulant dans les tubes du faisceau de bas en haut.

La rangée intérieure de tubes du faisceau est fermée intérieurement par une virole 24 fixée à sa partie supérieure sur le bord intérieur de la plaque tubulaire 22. La virole 24 est fermée à sa partie inférieure par un fond bombé 25. Sur le bord intérieur de la plaque tubulaire 22 est également fixée une virole tronconique 26 reliée à l'enveloppe 27 de la pompe 28 et assurant sa suspension dans l'espace intérieur de l'échangeur économiseur 20. Une troisième enveloppe 30 constituée de portions tronconiques cylindriques et sphériques est disposée entre la virole tronconique de support 26 et la virole fermée 24-25. Cette virole 30 est reliée sur sa périphérie à la virole 24 qui comporte des ouvertures de passage du sodium vers les tubes du faisceau entre la virole tronconique 26 et la partie tronconique de l'enveloppe 30.

La pompe 28 comporte un conduit de refoulement 31 débouchant dans l'espace compris entre la virole 26 et l'enveloppe 30.

La partie motrice de la pompe est disposée autour du conduit 31, à l'intérieur de l'enveloppe 27. Enfin, un débitmètre 32 est placé au niveau de la partie supérieure du conduit 31 pour la mesure du débit de sodium passant dans la pompe.

La partie supérieure de la pompe dans laquelle le sodium liquide est aspiré est en communication avec la sortie 18a du filtre 18, la pompe et la partie 18a du filtre étant placées dans le prolongement l'une de l'autre sans être fixées.

La partie motrice de la pompe est alimentée par des conducteurs électriques 34 isolés et résistant au sodium liquide à haute température.

Le filtre 18 comporte une enveloppe externe cylindrique 35 fixée de façon articulée à la partie inférieure de la virole 17 à l'intérieur de laquelle une seconde enveloppe 36 est fixée par l'intermédiaire d'une plaque circulaire 37 comportant des ouvertures pour le passage du sodium. L'enveloppe 36 est fermée à sa partie inférieure par une plaque circulaire 38 également percée d'ouvertures pour le passage du sodium. L'enveloppe 36 renferme deux cartouches filtrantes tubulaires 39a et 39b en fil d'acier inoxydable tricoté disposées coaxialement.

La partie de sortie 18a du filtre 18 communique avec l'intérieur de la cartouche filtrante entourée par l'enveloppe 36, par l'intermédiaire de la plaque perforée 38.

Le filtre 18 est entouré par la partie 8b de la virole de suspension 8 à l'intérieur de laquelle est placé un liquide d'échange thermique tel que le mélange eutectique Na−K. Un très faible espace annulaire subsiste entre la virole de suspension 8 et l'enveloppe externe 35 du filtre. C'est dans cet espace annulaire que passent les câbles 34 d'alimentation de la pompe.

La partie 8b de la virole 8 comporte sur sa surface externe, sur la plus grande partie de sa hauteur disposée en face du filtre 18, des ailettes 40 permettant de faciliter les échanges thermiques entre de l'air de refroidissement circulant au contact de ces ailettes et le liquide contenu dans la partie 8b de la virole constituant un joint thermique entre la face interne et la face externe de cette virole de suspension.

La virole de suspension porte à l'extrémité inférieure de sa partie 8b un anneau de fixation 41 sur lequel est soudée une virole 42 fixée à sa partie supérieure à la bride 7 par l'intermédiaire d'un soufflet de dilatation 43. Une virole 44 coaxiale à la virole 42 qui est elle-même coaxiale à la virole de suspension 8 est placée entre ces deux viroles et fixée à la bride 7 par l'intermédiaire d'un soufflet de dilatation 45.

Les viroles 8, 42 et 44 constituent un parcours de circulation d'air de refroidissement entrant dans l'espace annulaire entre la virole 8 et la virole 44 par une canalisation 47 et sortant de l'espace annulaire entre les viroles 42 et 44 par une canalisation 48.

La virole externe 42 est recouverte sur sa surface extérieure par une couche de calorifuge 50 qui l'isole du sodium liquide dans lequel plonge le dispositif de purification.

La surface extérieure ailetée de la virole 8 et les viroles 42 et 44 permettant une circulation d'air de refroidissement au contact des ailettes 40 avec le

retour de l'air échauffé par la partie annulaire externe constituent les moyens de refroidissement complémentaire du sodium au niveau du filtre, ce refroidissement se produisant par mise en contact thermique de ce sodium avec la paroi intérieure refroidie de la virole de suspension 8, par l'intermédiaire de la couche de sodium remplissant l'espace annulaire entre les viroles 8 et 35.

La virole de suspension 8 qui est en contact sur toute sa longueur avec l'air de refroidissement entrant par la canalisation 47 est ainsi parfaitement refroidie par ce fluide thermique de refroidissement en circulation.

Le fonctionnement du dispositif représenté sur la fig. 1 est le suivant: la pompe 28 fonctionnant dans le sens indiqué, c'est-à-dire créant une aspiration dans le filtre 18 par l'intermédiaire de sa partie de sortie 18a, provoque une aspiration de sodium dans l'espace compris entre les parois du filtre 35 et 36 par l'intermédiaire de la plaque perforée 37. Cet espace communiquant avec la plaque tubulaire 22, il se produit également une aspiration dans les tubes du faisceau et dans le collecteur d'entrée 21. Il en résulte une circulation de sodium suivant le sens indiqué par les flèches 55. Le sodium chaud à épurer contenu dans la cuve pénètre dans le collecteur 21 puis est réparti dans les tubes de l'échangeur économiseur 20 et ressort par la plaque tubulaire 22 pour entrer dans l'espace entre les viroles 35 et 36 par sa partie inférieure. C'est dans cet espace que se produit le refroidissement complémentaire du sodium liquide par la circulation d'air en contact avec les ailettes de la virole de suspension 8.

A la partie supérieure du filtre 18, le sodium liquide refroidi pénètre dans l'enveloppe 36 de ce filtre contenant les cartouches filtrantes 39, par la plaque perforée 37. Les perforations de la plaque 37 sont telles que le sodium refroidi pénètre dans la zone du filtre occupée par les cartouches filtrantes 39, à la fois par la partie centrale et par la périphérie de ces cartouches 39a et 39b.

Les perforations de la plaque inférieure 38 du filtre sont telles que le sodium ressort dans la partie inférieure 18a du filtre par la zone annulaire comprise entre les deux cartouches filtrantes 39a et 39b. L'épuration se produit donc par traversée des cartouches filtrantes par le sodium, aussi bien par l'intérieur que par l'extérieur. Le sodium refroidi et épuré recueilli dans la chambre 18a est aspiré par la pompe 28, son débit étant contrôlé par le débitmètre 32. Ce débit peut être étant réglé en fonction de la pureté du sodium, grâce à des moyens de réglage du courant d'alimentation de la pompe associés à cette pompe. Le sodium liquide refroidi et épuré est alors refoulé par la pompe dans l'espace compris entre les enveloppes 27 et 30 qui est en communication avec la partie supérieure de l'échangeur économiseur 20, à l'extérieur des tubes du faisceau. Le sodium refroidi et épuré circule donc de haut en bas dans le faisceau, entre la virole 24 et la virole de fermeture du faisceau disposée dans le prolongement de la virole 8c. Il se produit donc un échange thermique entre le sodium froid à épurer circulant à l'extérieur des tubes et le sodium chaud à épurer qui entre dans le faisceau par le collecteur 21. Le sodium refroidi et épuré est renvoyé dans la cuve à la base du dispositif de purification, grâce à une virole tronconique 56 canalisant le flux sortant de sodium liquide.

L'ensemble de la partie inférieure du dispositif d'épuration 3 est entouré par une couche de matériau calorifuge 50 fixée sur la virole extérieure 42 permettant de canaliser la circulation d'air de refroidissement.

La virole de suspension 8 du dispositif de purification est refroidie par la circulation d'air au contact de sa paroi externe, cet air étant envoyé à une température de 35 °C par la canalisation 47, puis récupéré par la canalistion 48 à une temperature voisine de 75 °C. Un échangeur de chaleur permettant le refroidissement de l'air en circulation placé à l'extérieur de la cuve est intercalé sur un circuit comportant les canalisations 47 et 48.

La pompe 28 est entourée par un espace limité par l'enveloppe 30 dans lequel circule du sodium refroidi sortant du filtre. La pompe est ainsi isolée du sodium chaud remplissant la cuve du réacteur et protégée contre des contraintes thermiques apparaissant lors des variations de température dans la cuve du réacteur.

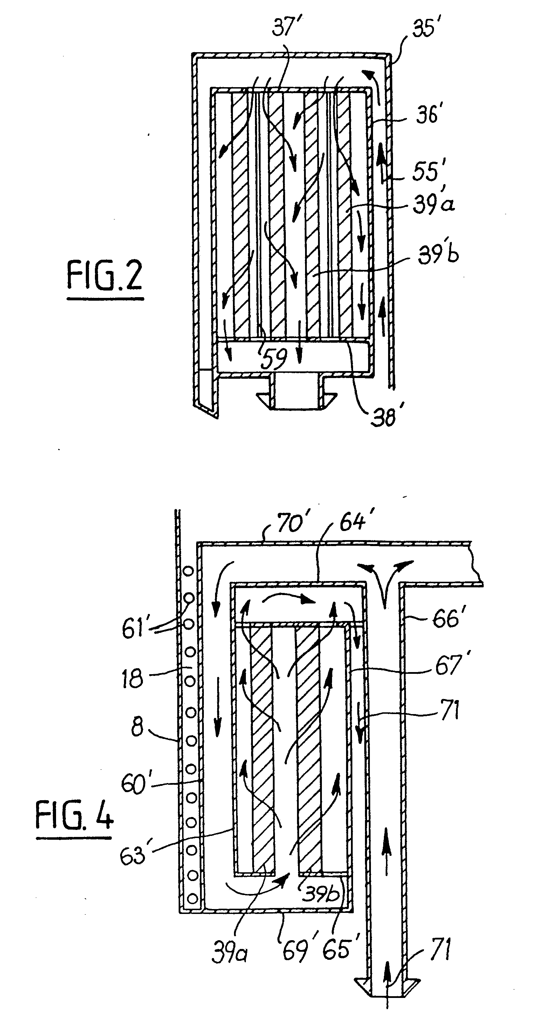

Sur la fig. 2, on voit une variante de réalisation de la partie interne du filtre permettant d'obtenir une circulation de sodium liquide depuis la partie supérieure du filtre suivant un parcours différent de celui représenté sur la fig. 1.

L'enveloppe extérieure du filtre 35' et l'enveloppe intérieure 36' renfermant les cartouches 39'a et 39'b ménagent entre elles un espace de circulation du sodium à épurer sortant de l'échangeur économiseur (flèches 55'). Les plaques supérieure 37' et inférieure 38' de l'enveloppe intérieure 36' sont percées de façon que le sodium à épurer entre dans le filtre par l'espace annulaire entre les cartouches 39'a et 39'b et sorte du filtre par l'espace intérieur central et l'espace périphérique autour du filtre, à l'intérieur de l'enveloppe 36'. Une virole 59 sépare les deux cartouches filtrantes coaxiales.

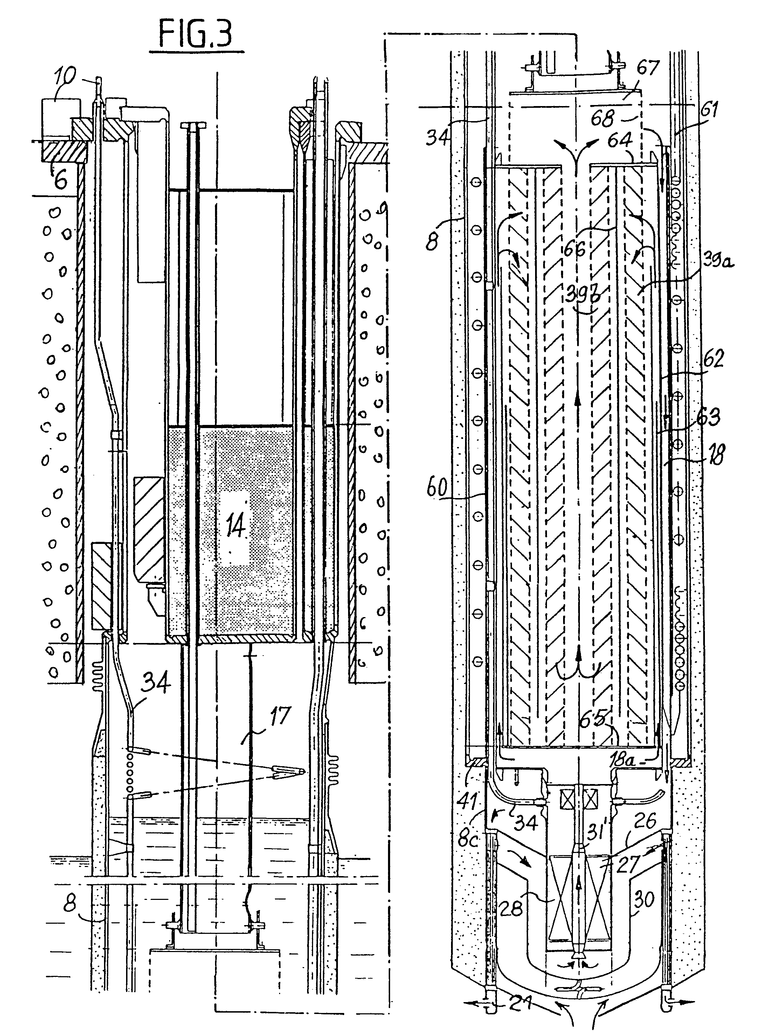

Sur la fig. 3, on voit un second mode de réalisation d'un dispositif de purification suivant l'invention; des repères identiques sont utilisés pour les éléments correspondants des dispositifs représentés aux fig. 1 et 3. La circulation du sodium à l'intérieur du dispositif de purification est totalement inversée par rapport au mode de réalisation de la fig. 1. La pompe 28 aspire du sodium entre les parois 27 et 30, pour le refouler dans l'espace d'entrée 18a du filtre. Le sodium entourant la pompe et aspiré par celle-ci est du sodium refroidi ayant traversé l'échangeur économiseur de bas en haut. D'autre part, la virole de suspension 8 du dispositif de purification constitue dans ce mode de réalisation la paroi externe de l'espace annulaire de refroidissement entourant le filtre 18. Cet espace de refroidissement est limité vers l'intérieur par une virole 60 coaxiale à la virole 8 fixée sur la pièce annulaire 41 solidaire de la partie inférieure de la virole 8. L'espace annulaire de refroidissement entre les viroles 8 et 60 est rempli par du sodium stagnant dans lequel plonge un serpentin 61 dans lequel circule un gaz inerte refroidi à l'extérieur de la cuve permettant de maintenir le sodium stagnant entre les viroles 8 et 60 à une température relativement basse.

Le bouchon de fermeture de la dalle situé au-dessus du dispositif de purification a dû être modifié comme représenté pour permettre le passage des tuyauteries d'alimentation du serpentin de refroidissement 61.

Le filtre 18 comporte une enveloppe extérieure 62, une enveloppe intérieure 63, une plaque de fermeture supérieure 64 et une plaque de fermeture inférieure 65. Une virole 66 fixée sur la plaque supérieure 64 permet de séparer les cartouches filtrantes 39a et 39b jusqu'à un niveau situé au-dessus de la plaque 65. Le filtre comporte également une chambre supérieure de sortie du sodium épuré 67 limitée extérieurement par une virole percée 68. C'est par l'intermédiaire de cette chambre 67 que le filtre 18 est suspendu à l'intérieur du dispositif de purification. La plaque 64 est percée à sa partie centrale et la plaque 65 à sa périphérie de façon que le sodium à épurer venant de la chambre d'entrée 18a de la pompe pénètre dans l'espace entre les viroles 60 et 62 avant d'être canalisé jusqu'à la partie supérieure de la virole 63 et d'entrer en contact avec la cartouche filtrante 39a. Le sodium descend ensuite le long de la virole 66 pour venir en contact avec la cartouche filtrante intérieure 39b et remonter dans la chambre de sortie 67 du filtre par l'espace intérieur de la cartouche 39b. Le sodium épuré passe alors dans l'espace annulaire entre les viroles 60 et 62 dans lequel il est refroidi par les moyens de refroidissement complémentaire 61, par l'intermédiaire du sodium stagnant dans l'espace annulaire entourant la virole d'échange 60.

Le sodium refroidi et épuré arrive ensuite dans l'espace limité par les viroles 8c et 26 au-dessus de la plaque 22 du faisceau tubulaire pour entrer dans les tubes de ce faisceau et refroidir le sodium à épurer circulant à contre-courant à l'extérieur des tubes. Le sodium épuré et refroidi sort du dispositif de purification par le collecteur inférieur 21.

Les câbles d'alimentation 34 de la pompe passent dans l'espace annulaire directement en contact avec l'espace de refroidissement au niveau du filtre 18.

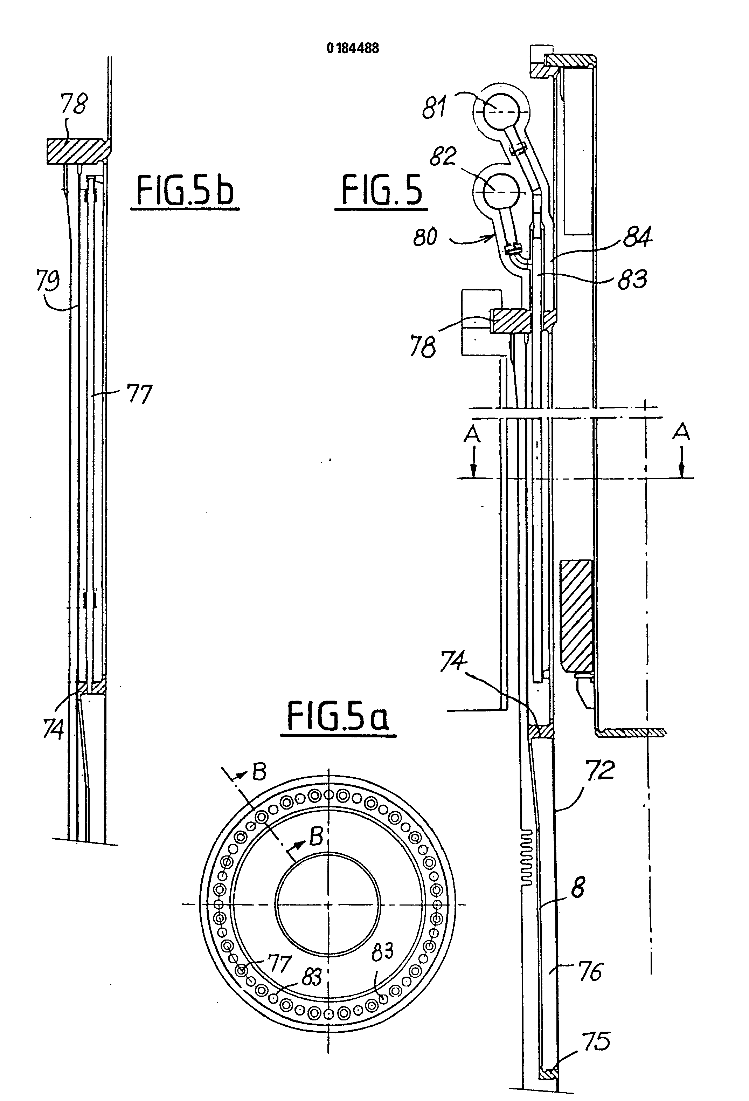

Sur la fig. 4 on voit une variante de réalisation du filtre du dispositif de purification représenté à la fig. 3 ainsi que la circulation du sodium dans ce filtre.

Le filtre 18 comporte une enveloppe externe 60' une enveloppe interne 63', un fond supérieur 64' et un fond inférieur 65'.

Dans l'espace intérieur de la cartouche filtrante 39b, sont également disposées deux viroles 66' et 67' fixées respectivement à la plaque supérieure 64' et à la plaque inférieure 65'. L'enveloppe extérieure 60' est fermée par deux plaques 69' et 70'. La virole 66' est placée dans le prolongement de la conduite de sortie 31 de la pompe si bien que le sodium liquide suit le parcours représenté par les flèches 71, d'abord de bas en haut dans la virole 66', puis de haut en bas dans l'espace annulaire entre les enveloppes 60' et 63' pour arriver sous la plaque inférieure 65', en-dessous d'ouvertures communiquant avec l'espace annulaire entre les deux cartouches filtrantes 39a et 39b. Le sodium à épurer traverse les cartouches de filtration, l'espace annulaire entre ces cartouches étant fermé à sa partie supérieure. Le sodium épuré se retrouve en partie haute du filtre et s'écoule de haut en bas dans l'espace annulaire compris entre les viroles 66' et 67' pour se retrouver dans l'espace limité par la virole tronconique 26 au-dessus de la plaque tubulaire 22. Le sodium liquide épuré et refroidi par les dispositifs 61' disposés entre les viroles 8 et 60' passe alors dans les tubes de l'échangeur économiseur où il assure le refroidissement du sodium chaud à épurer entrant dans le dispositif de purification.

Sur les fig. 5, 5a et 5b, on voit une variante de réalisation d'un dispositif de refroidissement complémentaire qui peut être associé à un dispositif de purification tel que représenté à la fig. 1 ou tel que représenté à la fig. 3.

L'espace annulaire de refroidissement complémentaire est limité par la virole de suspension 8 et une virole interne 72, les viroles 8 et 72 étant réliées à leur partie supérieure et à leur partie inférieure respectivement par des pièces annulaires 74 et 75. Dans l'espace annulaire de refroidissement entre les viroles 8 et 72 est introduit un fluide de refroidissement vaporisable 76. Comme il est visible sur la fig. 5b, la pièce annulaire 74 comporte des ouvertures dans lesquelles des tubes à ailettes 77 sont fixés de façon étanche. L'extrémité supérieure des tubes 77 est fermée. Dans l'espace annulaire compris entre la virole de suspension 8 et une virole extérieure 79 et limité par la pièce annulaire 74 et la bride de support 78 du dispositif de purification, de l'air de refroidissement est amené par un dispositif 80 comportant deux collecteurs toriques 81 et 82 pour l'introduction et la récupération de l'air dans l'espace annulaire par des tubes concentriques 83 et 84 respectivement.

Sur la fig. 5a, on voit la disposition circonférentielle des tubes ailetés 77 et des tubes d'introduction d'air de refroidissement 83. Ces tubes sont disposés à la suite les uns des autres de façon alternée.

Du sodium circulant au niveau du filtre 18 vient en contact lors de son parcours vertical vers le haut ou vers le bas avec la paroi 72 et se refroidit au contact du liquide vaporisable 76 dont la vapeur s'élève dans l'espace annulaire entre les viroles 8 et 72. La vapeur pénètre ensuite dans les tubes à ailettes 77 où elle est condensée puis retombe dans l'espace entre les viroles 8 et 72. On peut obtenir un refroidissement intense du sodium en circulation avec la surface intérieure de la paroi 72 en utilisant un liquide ayant une chaleur latente de vaporisation élevée.

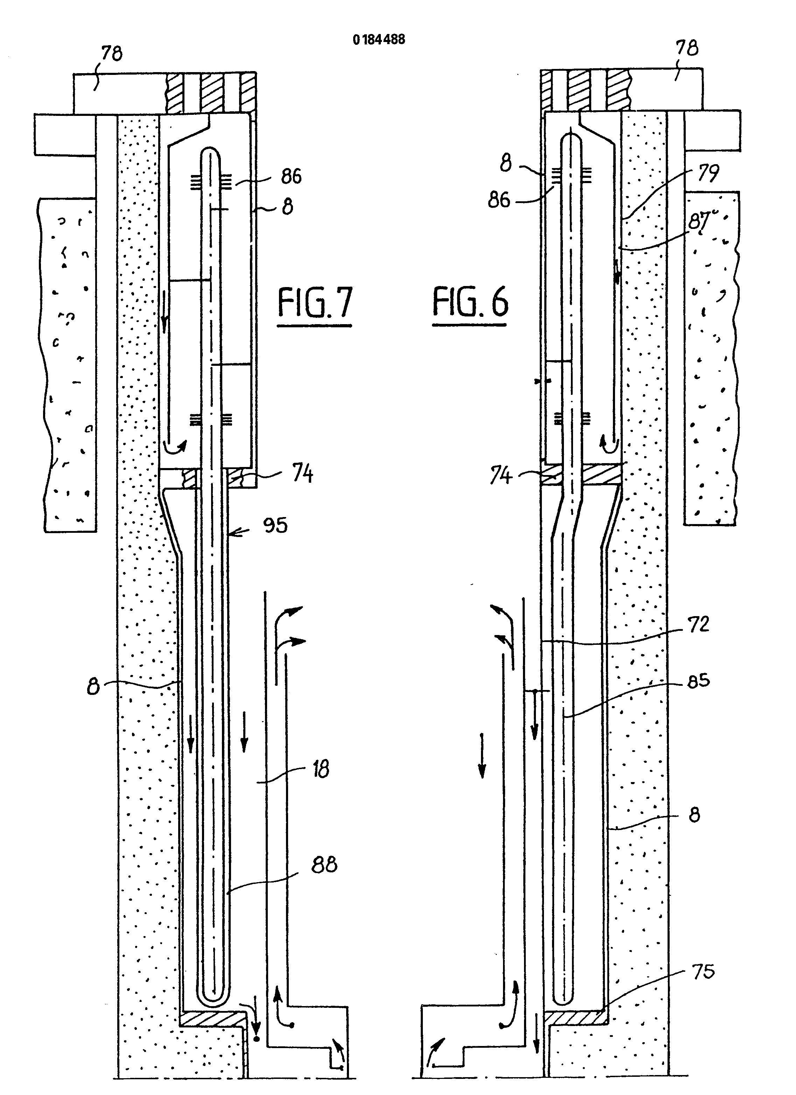

Sur la fig. 6, on voit une variante de réalisation du dispositif de refroidissement complémentaire représenté aux fig. 5, 5a et 5b. Les éléments équivalents sur les fig. 5 et 6 sont désignés par les mêmes repères.

L'espace annulaire entre les viroles 8 et 72 et entre les pièces annulaires 74 et 75 renferme un fluide d'échange thermique à la place du fluide vaporisable 76, ce fluide pouvant être du sodium ou un fluide organique à point de vaporisation élevé.

Dans ce fluide plonge une série de tubes 85 fermés à leurs extrémités de façon étanche. Ces tubes traversent la pièce annulaire 74 et leur partie disposée au-dessus de la pièce 74 comporte des ailettes 86.

Une virole 87 disposée entre les viroles 8 et 79 en partie supérieure du dispositif permet une circulation d'air au contact de la partie ailetée 86 des tubes 85.

Le sodium en circulation soit de bas en haut soit de haut en bas dans la zone du filtre se refroidit en échauffant le fluide d'échange thermique placé entre les viroles 8 et 72. L'échauffement de ce fluide produit la vaporisation du fluide vaporisable contenu dans les tubes 85; la vapeur de ce fluide vaporisable s'élève dans la partie de refroidissement des tubes pour y être condensée et renvoyée dans la partie inférieure du tube 85.

Sur la fig. 7, on voit une seconde variante de réalisation du dispositif de refroidissement complémentaire représenté à la fig. 5. Le dispositif est identique dans sa partie supérieure au dispositif représenté sur la fig. 6 mais la partie inférieure des tubes 95, en-dessous de la pièce annulaire 74 plonge directement dans le sodium liquide en circulation à la périphérie du filtre 18.

Il peut être très intéressant d'utiliser de l'eau comme fluide vaporisable dans la partie inférieure des tubes 95 mais dans ce cas, il faut éviter que cette eau soit séparée du sodium de la cuve en circulation dans le filtre par une simple paroi. Les tubes 95 ont donc une double paroi en partie inférieure et l'espace interne de cette double paroi 88 est rempli par un liquide d'échange tel que le mercure.

On voit que les principaux avantages du dispositif selon l'invention sont de permettre un bon refroidissement et donc un maintien à une température modérée de la virole de suspension du dispositif de purification et de comporter une pompe placée de façon à être entourée de métal liquide refroidi dans lequel débouche son conduit d'aspiration ou de refoulement. La pompe assure un réglage du débit sodium à épurer directement à partir de son courant de commande. De plus aucune tuyauterie ne relie les différents organes entre eux.

L'invention ne se limite pas aux modes de réalisation qui ont été décrits.

C'est ainsi qu'on peut imaginer des filtres d'une forme différente comportant une seule cartouche filtrante tubulaire ou au contraire plus de deux cartouches tubulaires ainsi qu'un ensemble de viroles et de plaques de déflection du flux de sodium d'une réalisation différente de celles qui ont été décrites.

Dans le cas où le filtre comporte au moins deux cartouches filtrantes, les viroles et plaques de déflection peuvent être disposées de façon à canaliser le sodium de façon différentes. En particulier, la circulation dans les cartouches filtrantes peut se faire avec traversée de celles-ci en parallèle ou en série.

On peut également imaginer d'autres dispositifs de refroidissement complémentaire disposés dans un espace annulaire entourant le filtre, ces dispositifs de refroidissement utilisant la circulation d'un fluide d'échange ou la vaporisation d'un fluide auxiliaire.

On peut également imaginer d'autres modes de circulation du sodium dans la partie inférieure du dispositif autour de la pompe.

Enfin, le dispositif de purification intégré suivant l'invention s'applique à tous les réacteurs nucléaires à neutrons rapides refroidis par du métal liquide comportant une cuve dans laquelle le cœur du réacteur est immergé dans un métal liquide.

## Revendications

1. Dispositif de purification intégré du métal liquide de refroidissement d'un réacteur nucléaire à neutrons rapides comportant une cuve remplie de métal liquide renfermant le cœur du réacteur et une dalle horizontale (1) de fermeture de la cuve, le dispositif de purification (3) comportant une virole de support et de suspension (8) reposant sur la dalle (1) par une bride (7) solidaire de sa partie supérieure et pénétrant dans la cuve par une ouverture (4) traversant la dalle (1), la virole de suspension (8) étant disposée avec son axe vertical, dans sa position de service à l'intérieur de la cuve, des moyens de filtration en fibres métalliques (18) de forme tubulaire disposés coaxialement par rapport à la virole de suspension (8), une pompe (28) de mise en circulation du métal liquide, un échangeur économiseur (20) pour le refroidissement du métal liquide à purifier par du métal liquide refroidi et purifié et des moyens de refroidissement complémentaire (40, 42, 44, 61) du métal liquide placés dans un espace annulaire entourant les moyens de filtration (18) sur toute leur hauteur, limité par deux parois cylindriques coaxiales (8, 42, 60), la virole de suspension (8) constituant une des parois limitant l'espace annulaire qui contient un fluide d'échange thermique assurant le refroidissement du métal liquide au niveau des moyens de filtration (18) ainsi que le refroidissement de la virole de suspension (8), caractérisé par le fait:

– que l'échangeur économiseur est constitué par un faisceau tubulaire (20) à axe vertical et à section transversale en forme d'anneau suspendu à la partie inférieure (8c) de la virole de suspension (8) coaxialement à celle-ci, en dessous de l'espace annulaire de refroidissement, la partie d'entrée de l'échangeur économiseur (20) recevant le métal liquide chaud contenu dans la cuve étant située à sa partie inférieure,

– et que la pompe (28) de mise en circulation du métal liquide est disposée dans l'espace intérieur de l'échangeur économiseur (20) et entourée par des parois (26, 27, 30) assurant sa fixation par rapport à l'échangeur économiseur (20) et ménageant un espace autour de la pompe (28) en communication avec la partie supérieure de l'échangeur économiseur (20) dans laquelle circule du métal liquide refroidi.

2. Dispositif de purification suivant la revendication 1, caractérisé par le fait que la pompe (28) comporte un conduit de refoulement (31) débouchant dans l'espace entourant la pompe en communication avec la partie supérieure de l'échangeur économiseur, pour le refoulement de sodium purifié à la partie supérieure de l'échangeur économiseur (20) en contact avec la surface extérieure des tubes de cet échangeur économiseur, l'extrémité d'entrée du conduit (31) de la pompe (28) communiquant avec l'intérieur du filtre (18) pour l'aspiration de sodium liquide contenu dans la cuve où est plongé le dispositif de purification (3) par l'intermédiaire des tubes de l'échangeur économiseur (20) et des éléments de filtration (39a et 39b) du filtre (18).

3. Dispositif de purification intégré suivant la revendication 1, caractérisé par le fait que la pompe (28) comporte un conduit d'aspiration (31') débouchant à l'intérieur de l'espace entourant la pompe, pour l'aspiration de métal liquide à épurer refroidi par circulation au contact de la surface externe des tubes de l'échangeur économiseur (20), l'autre extrémité ou extrémité de refoulement du conduit (31') étant en communication avec l'espace intérieur du filtre (18), pour le refoulement de métal à épurer dans le filtre puis dans les tubes de l'échangeur économiseur (20) après épuration et refroidissement dans le dispositif de refroidissement complémentaire, le métal épuré étant renvoyé dans la cuve à la partie inférieure du faisceau tubulaire de l'échangeur économiseur (20).

4. Dispositif de purification suivant l'une quelconque des revendications 1, 2 et 3, caractérisé par le fait que les moyens de refroidissement complémentaire (40, 42, 44) disposés dans l'espace annulaire autour du filtre (18) sont constitués par des ailettes de refroidissement (40) fixées sur la paroi intérieure (8b) de l'espace annulaire et par des viroles (42, 44) coaxiales permettant une circulation de fluide thermique de refroidissement au contact des ailettes (40) sur toute la hauteur de l'espace annulaire.

5. Dispositif de purification suivant l'une quelconque des revendications 1, 2 et 3, caractérisé par le fait que les moyens de refroidissement complémentaire autour du filtre (18) sont constitués par un liquide vaporisable (76) disposé dans l'espace annulaire compris entre la virole de suspension (8) et une virole (72) disposée coaxialement à l'intérieur de la virole (8), fermé à sa partie inférieure et communiquant à sa partie supérieure avec des moyens de condensation de la vapeur du liquide vaporisable (76) constitués par des tubes à ailettes (77) dont la surface extérieure est placée dans une zone de circulation d'air de refroidissement.

6. Dispositif de purification suivant l'une quelconque des revendications 1, 2 et 3, caractérisé par le fait que les moyens de refroidissement complémentaire disposés autour des moyens de filtration (18) sont constitués par des tubes verticaux (85) fermés de façon étanche à leurs extrémités et renfermant un liquide vaporisable dans leur partie inférieure plongeant dans un liquide d'échange disposé dans l'espace annulaire limité par les viroles (8, 72) entourant le filtre (18), la partie supérieure des tubes (85) comportant des ailettes de refroidissement (86) sur sa surface externe étant disposée dans un espace de circulation d'un fluide de refroidissement.

7. Dispositif de purification suivant l'une quelconque des revendications 1, 2 et 3, caractérisé par le fait que les moyens de refroidissement complémentaire sont constitués par des tubes verticaux (95) comportant une partie inférieure plongeant dans du métal liquide dans un espace annulaire autour des moyens de filtration (18), renfermant un liquide vaporisable comportant une double paroi (88) remplie par un liquide d'échange thermique ainsi qu'une partie supérieure comportant des ailettes de refroidissement sur sa surface externe et disposée dans une zone de circulation de fluide de refroidissement.

8. Dispositif de purification suivant l'une quelconque des revendications 1 à 7, caractérisé par le fait que des moyens de réglage du courant d'alimentation sont associés à la pompe pour permettre de réglage du débit de sodium en circulation dans le dispositif de purification.

**Patentansprüche**

1. Integrierte Reinigungsvorrichtung für Flüssigmetall zum Kühlen eines schnellen Kernreaktors, umfassend einen mit Flüssigmetall gefüllten Behälter, einschliessend den Kern des Reaktors und eine horizontale Verschlussplatte (1) des Behälters, wobei die Reinigungsvorrichtung (3) einen Stütz- und Aufhängungsring (8), der auf der Platte (1) mittels eines fest mit seinem oberen Teil verbundenen Flansches (7) ruht und durch eine die Platte (1) durchdringende Öffnung (4) in den Behälter eindringt, wobei der Aufhängungsring (8) mit seiner vertikalen Achse in seiner Betriebsposition im Inneren des Behälters angeordnet ist, Filtermittel aus Metallfasern (18) mit Rohrform, die koaxial in bezug auf den Aufhängungsring (8) angeordnet sind, eine Pumpe (28) zum Zirkulieren des Flüssigmetalls, einen Vorkühlaustauscher (20) zum Kühlen des zu reinigenden Flüssigmetalls mittels des gekühlten und gereinigten Flüssigmetalls und Mittel (40, 42, 44, 61) zum komplementären Kühlen des Flüssigmetalls, die in einem die Filtermittel (18) über ihre gesamte Länge, begrenzt durch zwei koaxiale zylindrische Wände (8, 42, 60), umgebenden ringförmigen Raum angeordnet sind, wobei der Aufhängungsring (8) eine der Wände bildet, die den ringförmigen Raum begrenzen, der ein Wärmeaustauschfluid enthält, das die Kühlung des Flüssigmetalls in der Höhe der Filtermittel (18) sowie die Kühlung des Aufhängungsringes (8) sicherstellt, dadurch gekennzeichnet, dass:

— der Vorkühlaustauscher durch Rohrbündel (20) mit vertikaler Achse und mit Querschnitt in Ringform gebildet ist, aufgehängt am unteren Teil (8c) des Aufhängungsrings (8) koaxial zu diesem, unterhalb des ringförmigen Kühlraums, wobei der Einlassteil des Vorkühlaustauschers (20) das im Behälter enthaltene, warme Flüssigmetall aufnimmt, wobei er an seinem unteren Teil liegt,

— und dass die Pumpe (28) zum Zirkulieren des Flüssigmetalls im Innenraum des Vorkühlaustauschers (20) angeordnet und von Wänden (26, 27, 30) umgeben ist, die ihre Befestigung in bezug auf den Vorkühlaustauscher (20) sicherstellen und einen Raum um die Pumpe (28) in Verbindung mit dem oberen Teil des Vorkühlaustauschers (20) aussparen, in dem abgekühltes Flüssigmetall zirkuliert.

2. Reinigungsvorrichtung nach Anspruch 1, dadurch gekennzeichnet, dass die Pumpe (28) eine Förderleitung (31) umfasst, die in dem die Pumpe umgebenden Raum in Verbindung mit dem oberen Teil des Vorkühlaustauschers steht, für das Fördern von gereinigtem Natrium zum oberen Teil des Vorkühlaustauschers (20) in Kontakt mit der Aussenfläche der Rohre dieses Vorkühlaustauschers, wobei das Einlassende der Leitung (31) der Pumpe (28) mit dem Inneren des Filters (18) für das Ansaugen von flüssigem Natrium, enthalten im Behälter in Verbindung steht, wo die Reinigungsvorrichtung (3) mittels der Rohre des Vorkühlaustauschers (20) und der Filterelemente (39a) und (39b) des Filters (18) eingetaucht ist.

3. Integrierte Reinigungsvorrichtung nach Anspruch 1, dadurch gekennzeichnet, dass die Pumpe (28) eine Saugleitung (31') umfasst, die im Inneren des die Pumpe umgebenden Raums mündet, für das Ansaugen von abgekühltem, zu reinigendem Flüssigmetall durch Zirkulation in Kontakt mit der Aussenfläche der Rohre des Vorkühlaustauschers (20), wobei das andere Ende oder Förderende der Leitung (31') in Verbindung mit dem Innenraum des Filters (18) für das Fördern von zu reinigendem Metall im Filter, dann in den Rohren des Vorkühlaustauschers (20) nach Reinigung und Abkühlung in der komplementären Kühlvorrichtung steht, wobei das gereinigte Metall am unteren Teil des Rohrbündels des Vorkühlaustauschers (20) in den Behälter zurückgegeben wird.

4. Reinigungsvorrichtung nach einem beliebigen der Ansprüche 1, 2 und 3, dadurch gekennzeichnet, dass die im ringförmigen Raum um den Filter (18) herum angeordneten Mittel (40, 42, 44) zum komplementären Kühlen durch auf der Innenwand (8b) des ringförmigen Raums befestigte Kühlflügel (40) und durch koaxiale Ringe (42, 44) gebildet sind, die eine Kühlzirkulation von thermischem Fluid in Kontakt mit den Flügeln (40) über die gesamte Höhe des ringförmigen Raums gestatten.

5. Reinigungsvorrichtung nach einem beliebigen der Ansprüche 1, 2 und 3, dadurch gekennzeichnet, dass die Mittel zum komplementären Kühlen um den Filter (18) durch eine im ringförmigen Raum angeordnete verdampfbare Flüssigkeit (76) gebildet sind, enthalten zwischen dem Aufhängungsring (8) und einem koaxial im Inneren des Rings (8) angeordneten Ring (72), der an seinem unteren Teil abgeschlossen ist und an seinem oberen Teil mit Mitteln zum Kondensieren des Dampfes der verdampfbaren Flüssigkeit (76) steht, gebildet durch Rohre mit Flügeln (77), deren Aussenfläche in einer Zone zum Zirkulieren von Kühlluft angeordnet ist.

6. Reinigungsvorrichtung nach einem beliebigen der Ansprüche 1, 2 und 3, dadurch gekennzeichnet, dass die um die Filtermitte (18) angeordneten Mittel zum komplementären Kühlen durch vertikale Rohre (85) gebildet sind, die auf dichte Weise an ihren Enden verschlossen sind und eine verdampfbare Flüssigkeit in ihrem unteren Teil enthalten, der in eine im ringförmigen Raum vorgesehene Austauschflüssigkeit eintaucht, begrenzt durch die den Filter (18) umgebenden Ringe (8, 72), wobei der obere Teil der Rohre (85) Kühlflügel (86) auf seiner Aussenfläche umfasst, angeordnet in einem Raum zum Zirkulieren eines Kühlfluids.

7. Reinigungsvorrichtung nach einem beliebigen der Ansprüche 1, 2 und 3, dadurch gekennzeichnet, dass die Mittel zum komplementären Kühlen durch vertikale Rohre (95) gebildet sind, umfassend einen in das Flüssigmetall eintauchenden unteren Teil in einem ringförmigen Raum um die Filtermittel (18) herum, enthaltend eine verdampfbare Flüssigkeit, umfassend eine doppelte Wand (88), die durch ein thermisches Austauschfluid gefüllt ist, sowie einen oberen Teil, umfassend Kühlflügel auf seiner Aussenfläche und angeordnet in einer Zone zum Zirkulieren von Kühlfluid.

8. Reinigungsvorrichtung nach einem beliebigen der Ansprüche 1 bis 7, dadurch gekennzeichnet, dass Mittel zum Regeln des Speisestroms der Pumpe zugeordnet sind, um die Regelung des Natriumdurchsatzes in Zirkulation in der Reinigungsvorrichtung zu gestatten.

## Claims

1. An integrated purification device for the liquid cooling metal of a fast neutron nuclear reactor comprising a vessel filled with liquid metal enclosing the reactor core and a horizontal slab (1) closing the vessel, the purification device (3) comprising: a support and suspension casing (8) resting on the slab (1) via a flange (7) connected to its upper portion and entering the vessel through an aperture (4) extending through the slab (1), the suspension casing (8) being disposed with its axis vertical in its operating position inside the vessel; tubular metal fibre filtration means (18) disposed coaxially in relation to the suspension casing (8); a pump (28) for circulating the liquid metal; an economizer exchanger (20) for cooling the liquid metal to be purified with cooled and purified liquid metal; and complementary means (40, 42, 44, 61) for cooling the liquid metal which are disposed in an annular space enclosing the filtration means (18) over their full height and bounded by two coaxial cylindrical walls (8, 42, 60), the suspension casing (8) forming one of the walls bounding the annular space, which contains a heat exchange fluid for cooling the liquid metal at the level of the filtration means (18) and also for cooling the suspension casing (8), characterized in that:

– the economizer exchanger is formed by a tube cluster (20) of vertical axis and annular cross-section which is suspended from the lower portion (8c) of the suspension casing (8) coaxially therewith below the annular cooling space, the inlet portion of the economizer exchanger (20) which receives the hot liquid metal contained in the vessel being disposed in its lower position,

– and the pump (28) for circulating the liquid metal is disposed inside the economizer exchanger (20) and enclosed by walls (26, 27, 30) via which it is attached to the economizer exchanger (20) and which bound a space around the pump (28) communicating with the upper portion of the economizer exchanger (20) in which the cooled liquid metal flows.

2. A purification device according to claim 1, characterized in that the pump (28) comprises a delivery conduit (31) discharging into the space enclosing the pump and communicating with the upper portion of the economizer exchanger, to deliver purified sodium to the upper portion of the economizer exchanger (20) in contact with the outer surface of the tubes thereof, the inlet end of the conduit (31) of the pump (28) communicating with the inside of the filter (18) to suck in liquid sodium contained in the vessel in which the purification device (3) is immersed via the tubes of the economizer exchanger (20) and the filtration elements (39a and 39b) of the filter (18).

3. An integrated purification device according to claim 1, characterized in that the pump (28) comprises an intake conduit (31') discharging inside the space enclosing the pump, to suck in liquid metal for purification cooled by flowing in contact with the outer surface of the tubes of the economizer exchanger (20), the other end (delivery end) of the conduit (31') communicating with the inside of the filter (18), to deliver metal to be purified to the filter, then to the tubes of the economizer exchanger (20) after purification and cooling in the complementary cooling device, the purified metal being returned to the vessel at the lower portion of the tube cluster of the economizer exchanger (20).

4. An integrated purification device according to any of claims 1, 2 and 3, characterized in that the complementary cooling means (40, 42, 44) disposed in the annular space around the filter (18) are formed by cooling fins (40) attached to the inner wall (8b) of the annular space and by coaxial casings (42, 44) allowing the thermal cooling fluid to flow in contact with the fins (40) over the full height of the annular space.

5. A purification device according to any of claims 1, 2 and 3, characterized in that the complementary cooling means around the filter (18) are formed by a vaporizable liquid (76) disposed in the annular space lying between the suspension casing (8) and a casing (72) disposed coaxially inside the suspension casing (8), such space being closed in its lower portion and communicating in its upper portion with means for condensing the vapour of the vaporizable liquid (76) which are formed by finned tubes (77) whose outer surface is disposed in a zone in which cooling air flows.

6. A purification device according to any of claims 1, 2 and 3, characterized in that the complementary cooling means disposed around the filtration means (18) are formed by vertical tubes (85) hermetically sealed at their ends and containing a vaporizable liquid in their lower portion immersed in an exchange liquid disposed in the annular space bounded by the casings (8, 72) enclosing the filter (18), the upper portion of the tubes (85), which comprises cooling fins (86) on its outer surface being disposed in a space in which a cooling fluid flows.

7. A purification device according to any of claims 1, 2 and 3, characterized in that the complementary cooling means are formed by vertical tubes (95) comprising a lower portion immersed in liquid metal in an annular space around the filtration means (18), the vertical tubes (95) enclosing a vaporizable liquid and comprising a double wall (88) filled with a heat exchange liquid and an upper portion whose outer surface is formed with cooling fins and which is disposed in a zone in which cooling fluid flows.

8. A purification device according to any of claims 1 to 7, characterized in that means for controlling the supply current are associated with the pump to enable the flow rate of sodium flowing in the purification device to be controlled.

FIG.1

0 184 488

FIG.2

FIG.4

13

0184488

## FIG.3

15

0184488

FIG.5b

FIG.5

FIG.5a

17

FIG.7

FIG.6